# EUROPEAN PATENT APPLICATION

(11) **EP 3 800 224 A1**
(43) Date of publication of application: **07.04.2021**
(21) Application number: 20199961.2
(22) Date of filing: 02.10.2020
(51) Int. Cl.: C08L 71/02, C08L 23/00, C11D 3/37

(54) **CLEANING COMPOSITION FOR REACTIVE ADHESIVES AND USE THEREOF**

(30) Priority: 04.10.2019 EP 19201519
(71) Applicant: Sika Technology AG, 6340 Baar (CH)
(72) Inventor: Arlt, Claudia, 22527 Hamburg (DE); Fröhlich, Hendrik, 25495 Kummerfeld (DE); Picon, Eduardo, 36370-A Ramallosa-Nigran (ES); Traupe, Lena, 22457 Hamburg (DE)
(74) Representative: Sika Patent Attorneys

(57) **Abstract**

The invention relates to a cleaning composition for use in removing reactive adhesives from production, processing and application devices. The cleaning composition comprises a carrier material **A** comprising at least one thermoplastic polymer and/or at least one polyether glycol, and at least one compound **B** containing one or more amine groups. The invention is also related to a method for removing reactive adhesives from production, processing and application devices and to the use of the composition for removing reactive adhesives from production, processing and application devices.

## Description

### Technical field

The invention relates to a cleaning composition for removing reactive adhesives, in particular moisture curable adhesives, from production, processing and application devices.

### Background of the invention

During processing of reactive adhesives, such as reactive hot-melt adhesives, hardened adhesive particles tend to deposit over time on the surfaces of the equipment. Hardened deposits are formed especially during short term production interruptions and longer stand-stills over night or over weekend. During the non-operation periods, the adhesive composition remains motionless in the equipment and deposits can occur especially on moving parts and nozzles of the processing plant. During production of moisture curable hot-melt adhesives, the hardened deposits are formed in places, where the adhesive comes in contact with the air and moisture of the surroundings. A regular cleaning of the equipment is, therefore, required to prevent unscheduled production interruptions and quality inconsistences. The equipment must usually also be cleaned between product changes in case the same equipment is used for producing different type of adhesives the contents of which cannot be mixed.

The production and application devices for adhesives, such as coating devices, have numerous narrow areas such as slots, nozzles, hoses and pipes as well as moving parts such as worms, vanes, rolls and agitators. These can be manually cleaned but only with great cost and labor expense since the cleaning of the parts requires at least partial dismantling of the afore mentioned apparatuses. Manual cleaning of the processing equipment is, therefore, typically not a realistic alternative.

Two techniques are commonly used for cleaning of equipment used for processing of reactive adhesives. The reactive adhesive composition can be removed from the processing apparatus by supplanting with a cleaning composition, which typically contains one or more thermoplastic polymers. The cleaning composition has typically a higher viscosity than the reactive adhesive to be removed and, therefore, it is able to drag the reactive adhesive with it while flowing through the processing apparatus. An alternative cleaning technique is based on the use of plasticizers, which decrease the viscosity of the reactive adhesive to such extent that it can be readily removed from the equipment surfaces by flushing with a cleaning liquid.

Both aforementioned cleaning techniques have some disadvantages, which make them less suitable for cleaning of devices used for production and application of reactive adhesives, in particular of moisture curable adhesives. Supplanting the reactive adhesive is especially difficult in case the device contains dead volumes, which are difficult to flush with the cleaning composition. On the other hand, in case of insufficient cleaning time, part of the moisture curable adhesive remains in the processing apparatus and hardens upon contact with moisture to form deposits of adhesive particles inside the equipment. Such deposits are difficult to detect without dismantling the equipment and the inadequacy of the cleaning time may remain unnoticed for long time periods. The use of plasticizers, especially phthalate based plasticizers, is generally not favored due to environmental and working safety considerations. Furthermore, the plasticizer residues are difficult to remove completely from the equipment and they can contaminate the batches of reactive adhesives produced long after the cleaning of the apparatus. Plasticizer based cleaning liquids are commonly used to clean equipment used for processing of non-reactive adhesives. Deposits of cured adhesive can only be removed from the equipment surfaces with solutions, which cause the swelling of the cured adhesive.

There is thus need for an improved cleaning composition, which can be used for removing reactive adhesives, in particular moisture curable adhesives, from production plants and application devices.

### Summary of the invention

The object of the present invention is to provide an improved cleaning composition, which enables effective removal reactive adhesives, in particular moisture curable adhesives, such as moisture curable polyurethane adhesives, from production, processing and application devices.

Another objective is to provide an improved method for removing reactive adhesives, in particular moisture curable adhesives, from production, processing and application devices.

It was surprisingly found out that a composition containing a carrier material based on a thermoplastic polymer and/or low molecular weight polyether glycols and at least one amine compound is able to solve the problems related to State-of-the-Art cleaning compositions for reactive adhesives.

The subject of the present invention is a cleaning composition as defined in claim 1.

One of the advantages of the cleaning composition of the present invention is that once it is used for supplanting reactive adhesive residues from the processing or application equipment, it simultaneously decomposes the polymer chains of the reactive adhesive in such extent that cleaning result is improved. The decomposition effect is based on certain components of the cleaning composition, which are able to break the chemical bonds, such as the urethane linkages of the polymer chains contained in the reactive adhesive. Owing to the decomposition of the polymer chains, the cleaning times can be shortened since the viscosity of the reactive adhesive to be removed from processing or application equipment is reduced.

Other subjects of the present invention are presented in other independent claims. Preferred aspects of the invention are presented in the dependent claims.

### Detailed description of the invention

The subject of the present invention is a cleaning composition comprising:
a) A carrier material **A** and
b) At least one compound **B** containing one or more amine groups, wherein
the carrier material **A** comprises at least one thermoplastic polymer and/or at least one polyether glycol having an average molecular weight (Mₙ) of not more than 1500 g/mol, preferably not more than 1000 g/mol and wherein
the at least one compound **B** is an aliphatic, cycloaliphatic, or arylaliphatic amine, an alkanolamine, or a polyetheramine.

The term "polymer" refers to a collective of chemically uniform macromolecules produced by a polyreaction (polymerization, polyaddition, polycondensation) where the macromolecules differ with respect to their degree of polymerization, molecular weight and chain length. The term also comprises derivatives of said collective of macromolecules resulting from polyreactions, that is, compounds which are obtained by reactions such as, for example, additions or substitutions, of functional groups in predetermined macromolecules and which may be chemically uniform or chemically non-uniform.

Substance names beginning with "poly" designate substances which formally contain, per molecule, two or more of the functional groups occurring in their names. For instance, a polyol refers to a compound having at least two hydroxyl groups. A polyether refers to a compound having at least two ether groups.

The term "a-olefin" designates an alkene having the molecular formula CₓH2ₓ (x corresponds to the number of carbon atoms), which features a carbon-carbon double bond at the first carbon atom (α-carbon). Examples of α-olefins include ethylene, propylene, 1-butene, 2-methyl-1-propene (isobutylene), 1-pentene, 1-hexene, 1-heptene and 1-octene. For example, neither 1,3-butadiene, nor 2-butene, nor styrene are referred as "a-olefins" according to the present disclosure. The term "poly-α-olefin" designates homopolymers and copolymers obtained by polymerization or oligomerization of α-olefins or multiple distinct α-olefins.

The term "thermoplastic polymer" refers to any polymeric material which can be melted and re-solidified with little or no change in physical properties.

The term "functionalized polymer" designates polymers which are chemically modified so as to contain a functional group on the polymer backbone. In contrast, the term "non-functionalized polymer" designates polymers which are not chemically modified so as to contain functional groups such as epoxy, silane, sulfonate, amide, or anhydride, on the polymer backbone. In the present disclosure the terms "(non)functionalized and "(un)modified" are used interchangeably.

The term "molecular weight" refers to the molar mass (g/mol) of a molecule or a part of a molecule, also referred to as "moiety". The term "average molecular weight" refers to number average molecular weight (Mₙ) of an oligomeric or polymeric mixture of molecules or moieties. The molecular weight may be determined by conventional methods, preferably by gel permeation-chromatography (GPC) using polystyrene as standard, styrene-divinylbenzene gel with porosity of 100 Angstrom, 1000 Angstrom and 10000 Angstrom as the column and tetrahydrofurane as a solvent, at 35°C.

The term "softening point" or "softening temperature" designates a temperature at which compound softens in a rubber-like state, or a temperature at which the crystalline portion within the compound melts. The softening point can be measured by a Ring and Ball method as defined in DIN EN 1238 standard.

The term "melting temperature" or "melting point" refers to a temperature at which a material undergoes transition from the solid to the liquid state. The melting temperature (Tₘ) is preferably determined by differential scanning calorimetry (DSC) according to ISO 11357-3 standard using a heating rate of 2 °C/min. The measurements can be performed with a Mettler Toledo DSC 3+ device and the Tₘ values can be determined from the measured DSC-curve with the help of the DSC-software. In case the measured DSC-curve shows several peak temperatures, the first peak temperature coming from the lower temperature side in the thermogram is taken as the melting temperature (Tₘ).

The term "reactive adhesive" refers to adhesive compositions which develop bonding properties as a result of curing or some other form of reaction mechanism. In case of multi-component adhesives, the reaction can be initiated by mixing of the components. In case of one-component adhesives, the reaction is initiated by applying external energy, such as heat or radiation to the adhesive or by contacting the adhesive with moisture or water.

The cleaning composition of the present invention comprises at least one compound **B** selected from the group consisting of aliphatic, cycloaliphatic, and arylaliphatic amines, alkanolamines, and polyetheramines. The at least one compound **B** is added to the cleaning composition as an active substance, which is able to at least partially decompose the constituents of the reactive adhesive to be removed from the production, processing, and application devices, for example, through glycolysis of the polyurethane chains contained in the reactive adhesive. Without being bound to any theory it is believed that the hydroxyl groups and/or the amine groups, in particular primary amine groups are able to cleave the urethane and/or urea bonds of the polymers contained in the reactive adhesive.

According to one or more embodiments, the at least one compound **B** is selected from the group consisting of alkanolamines and polyetheramines having one or more primary amine groups.

Suitable alkanolamines for use as the at least one compound **B** include, for example, monoalkanol, dialkanol and trialkanol amines, such as ethanolamine, dimethylaminoethanol, methylethanolamine, N,N-diethylethanolamine, 2-amino-2-methyl-propanol, N-butylethanolamine, N-methyldiisopropanolamine, methyldiethanolamine, diisopropanolamine, triisopropanolamine, diethanolamine, triethanolamine, N-butyldiethanolamine, and 2-amino-2-methyl-1,3-propandiol.

Suitable polyetheramines having one or more primary amine groups for use as the at least one compound **B** include, in particular, polyoxyalkylenedi- and triamines having a molecular weight up to 6000 g/mol, in particular the ones, which are commercially available from Huntsman as Jeffamine® D-230, D-400, D-2000, D-4000, T-403 and T-5000 as well as the similar compounds available from BASF or Nitroil.

Preferred compounds for use as the at least one compound **B** are substantially soluble in water, have a substantially low vapor pressure at normal room temperature, and a substantially high flash point.

According to one or more embodiments, the at least one compound **B** has:
- a solubility in water at a temperature of 20 °C of at least 1 g/100 g water, preferably at least 5 g/100 g water, more preferably at least 10 g/100 g water and/or
- a vapor pressure at a temperature of 20 °C of not more than 500 Pa, preferably not more than 250 Pa, more preferably not more than 150 Pa, even more preferably not more than 50 Pa, still more preferably not more than 25 Pa, most preferably not more than 10 Pa and/or
- a flash point of at least 75 °C, preferably at least 100 °C, more preferably at least 125 °C, even more preferably at least 135 °C, still more preferably at least 150 °C.

The solubility of a compound in water can be measured as the saturation concentration, where adding more compound does not increase the concentration of the solution, i.e. where the excess amount of the substance begins to precipitate. The measurement for water-solubility of a compound in water can be conducted using the standard "shake flask" method as defined in the OECD test guideline 105 (adopted 27th July, 1995).

The vapor pressure of a compound can be measured using the "gas saturation method" as defined in the OECD test guideline 105 (adopted 27th July, 1995).

The flash point of a compound can be measured using the method as defined in ISO 1516:2002 standard using an Abel closed-cup flash point tester or a Tag closed-cup flash point tester.

According to one or more embodiments, the at least one compound **B** is an alkanolamine, preferably selected from the group consisting of methyldiethanolamine, dipropanolamine, diisopropanolamine, diethanolamine, triisopropanolamine, and triethanolamine, more preferably from the group consisting of triisopropanolamine and triethanolamine.

The cleaning composition further comprises a carrier material **A** comprising at least one thermoplastic polymer and/or at least one polyether glycol having an average molecular weight (Mₙ) of not more than 1500 g/mol, preferably not more than 1000 g/mol.

Preferably, the at least one thermoplastic polymer is free of functional groups that are reactive with isocyanate groups. The functional groups that are reactive with isocyanate groups include all functional groups comprising at least one active hydrogen atom, such as hydroxyl groups, mercapto groups, and amino groups. According to one or more embodiments, the at least one thermoplastic polymer is a non-functionalized thermoplastic polymer.

The type of the at least one thermoplastic polymer is not particularly restricted. Various types of thermoplastic polymers, including crystalline, semi-crystalline, and amorphous polymers and thermoplastic elastomers are suitable for use as the at least one thermoplastic polymer.

According to one or more embodiments, the at least one thermoplastic polymer is selected from the group consisting of homopolymers, copolymers, and terpolymers of monomers selected from the group consisting of ethylene, propylene, butylene, isobutylene, isoprene, vinyl acetate and vinyl ester with C₃ to C₁₂ carboxylic acids, (meth)acrylate, and styrene. In the context of the present disclosure, the term "(meth)acrylate" designates both esters of acrylic acid and esters of methacrylic acid.

According to one or more embodiments, the at least one thermoplastic polymer is selected from the group consisting of ethylene-vinyl acetate copolymers, ethylene-α-olefin copolymers, polyethylene, propylene-ethylene-copolymers, propylene-α-olefin copolymers, and polypropylene.

According to one or more embodiments, the at least one thermoplastic polymer is a non-functionalized thermoplastic polymer selected from the group consisting of ethylene-vinyl acetate copolymers, ethylene-α-olefin copolymers, polyethylene, propylene-ethylene-copolymers, propylene-α-olefin copolymers, and polypropylene.

Suitable ethylene-α-olefin copolymers include, for example, ethylene-α-olefin random and block copolymers of ethylene and one or more C₃-C₂₀ α-olefin monomers, in particular one or more of propylene, 1-butene, 1-pentene, 1-hexene, 1- heptene, 1-octene, 1-decene, 1-dodecene, and 1-hexadodecene, preferably comprising at least 50 wt.-%, more preferably at least 60 wt.-% of ethylene-derived units, based on the total weight of the copolymer.

Suitable propylene-α-olefin copolymers include propylene-ethylene random copolymers and propylene-α-olefin random and block copolymers of propylene and one or more C₄-C₂₀ α-olefin monomers, in particular one or more of 1-butene, 1-pentene, 1-hexene, 1- heptene, 1-octene, 1-decene, 1-dodecene, and 1-hexadodecene, preferably comprising at least 50 wt.-%, more preferably at least 60 wt.-% of propylene-derived units, based on the total weight of the copolymer.

Suitable copolymers of ethylene and vinyl acetate include those having a content of a structural unit derived from vinyl acetate in the range of 4 - 90 wt.-%, in particular 4 - 80 wt.-%, based on the total weight of the copolymer. Suitable copolymers of ethylene and vinyl acetate are commercially available, for example, under the trade name of Escorene® (from Exxon Mobil), under the trade name of Primeva® (from Repsol Quimica S.A.), and under the trade name of Evatane® (from Arkema Functional Polyolefins).

Suitable ethylene-α-olefin copolymers include, for example, ethylene-based polyolefin elastomers (POE), which are commercially available, for example, under the trade name of Engage®, such as Engage® 7256, Engage® 7467, Engage® 7447, Engage® 8003, Engage® 8100, Engage® 8480, Engage® 8540, Engage® 8440, Engage® 8450, Engage® 8452, Engage® 8200, and Engage® 8414 (all from Dow Chemical Company).

Other suitable ethylene-α-olefin copolymers include, for example, ethylene-based plastomers, which are commercially available, for example, under the trade name of Affinity®, such as Affinity® EG 8100G, Affinity® EG 8200G, Affinity® SL 8110G, Affinity® KC 8852G, Affinity® VP 8770G, and Affinity® PF 1140G (all from Dow Chemical Company) and under the trade name of Exact®, such as Exact® 3024, Exact® 3027, Exact® 3128, Exact® 3131, Exact® 4049, Exact® 4053, Exact® 5371, and Exact® 8203 (all from Exxon Mobil).

Further suitable ethylene-α-olefin copolymers include ethylene-α-olefin block copolymers, such as ethylene-based olefin block copolymers (OBC), which are commercially available, for example, under the trade name of Infuse®, such as Infuse® 9100, Infuse® 9107, Infuse® 9500, Infuse® 9507, and Infuse® 9530 (all from Dow Chemical Company).

Suitable propylene-α-olefin copolymers include, for example, propylene based elastomers (PBE) and propylene-based plastomers (PBP), which are commercially available, for example, under the trade name of Versify® (from Dow Chemical Company) and under the trade name of Vistamaxx® (from Exxon Mobil).

Further suitable polyolefin homopolymers and copolymers include at 25 °C solid amorphous poly-α-olefins. These are commercially available, for example, under the trade name of Vestoplast® (from Evonik Industries), under the trade name of Eastoflex® (from Eastman Corporation), and under the trade name of REXtac® (from REXtac LLC).

According to one or more embodiments, the at least one thermoplastic polymer has:
- a softening point determined by using a Ring & Ball method according to standard in the range of 55 - 185 °C, preferably 60 - 165 °C, more preferably 60 - 145 °C, even more preferably 65 - 125 °C, still more preferably 65 - 115 °C and/or
- a melting temperature (Tₘ) as determined by DSC according to ISO 11357 standard in the range of 50 - 165 °C, preferably 55 - 145 °C, more preferably 55 - 125 °C, even more preferably 55 - 115 °C, still more preferably 60 - 100 °C and/or
- a melt flow index measured according to ASTM D1238 (230 °C/2.16 kg) of 1
- 150 g/10 min, preferably 1 - 100 g/10 min, more preferably 1 - 50 g/10 min, even more preferably 1 - 25 g/10 min.

According to one or more embodiments, the at least one thermoplastic polymer is a copolymer of ethylene and vinyl acetate, preferably having:
- a content of a structural unit derived from vinyl acetate in the range of 4 - 90 wt.-%, preferably 8 - 70 wt.-%, more preferably 10 - 60 wt.-%, even more preferably 15 - 50 wt.-%, still more preferably 18 - 40 wt.-%, based on the total weight of the copolymer and/or
- a melt flow index measured according to ASTM D1238 (230 °C/2.16 kg) of 1
- 100 g/10 min, preferably 1 - 75 g/10 min, more preferably 1 - 50 g/10 min, even more preferably 1 - 25 g/10 min and/or
- a melt viscosity at 190 °C determined according to DIN 53019 standard of not more than 15000 MPa·s, preferably not more than 10000 MPa·s, more preferably not more than 7500 MPa·s. The melt viscosity can be determined by busing a rotational viscometer at 5 revolutions per minute, for example by using a Brookfield DV-2 Thermosel viscometer with a spindle No. 27.

Preferably, the at least one thermoplastic polymer, if present in the carrier material **A,** comprises at least 5 wt.-%, more preferably at least 15 wt.-%, even more preferably at least 25 wt.-%, still more preferably at least 35 wt.-%, such as at least 45 wt.-%, most preferably at least 55 wt.-%, of the total weight of the carrier material **A.** According to one or more embodiments, the at least one thermoplastic polymer comprises at least 70 wt.-%, preferably at least 75 wt.-%, more preferably at least 80 wt.-%, even more preferably at least 85 wt.-%, still more preferably at least 90 wt.-% of the total weight of the carrier material **A.**

The carrier material **A** can comprise, instead of or in addition to the at least one thermoplastic polymer, at least one polyether glycol having an average molecular weight of not more than 1500 g/mol, preferably not more than 1000 g/mol. It may be preferred that the carrier material **A** comprises the at least one thermoplastic polymer or the at least one polyether glycol having an average molecular weight of not more than 1500 g/mol, preferably not more than 1000 g/mol or not both of these.

According to one or more embodiments, the at least one polyether glycol has an average molecular weight in the range of 100 - 1000 g/mol, preferably 150 - 750 g/mol, more preferably 150 - 650 g/mol, even more preferably 150 - 550 g/mol, still more preferably 200 - 450 g/mol.

Suitable polyether glycols, also known as polyoxyalkylene glycols, can be prepared, for example, by polycondensation of ethylene glycol and/or propylene glycol or by the addition of epoxides to glycols.

Particularly suitable polyether glycols include polyethylene and polypropylene glycols, such as polyethylene glycol (PEG), methoxy polyethylene glycol (MPEG), polypropylene glycol (PPG), methoxy polypropylene glycol (MPPG), and polyethylene - polypropylene glycol (PEG-PPG) copolymers. Suitable polyether glycols are commercially available, for example, under the trade name of Carbowax® (from Dow Chemical Company).

According to one or more embodiments, the at least one polyether glycol is a polyethylene glycol or polypropylene glycol, preferably a polyethylene glycol.

Preferably, the at least one polyether glycol, if present in the carrier material **A,** comprises at least 5 wt.-%, more preferably at least 15 wt.-%, even more preferably at least 25 wt.-%, still more preferably at least 35 wt.-%, such as at least 45 wt.-%, most preferably at least 55 wt.-%, of the total weight of the carrier material **A.** According to one or more embodiments, the at least one polyether glycol comprises 55 - 99.5 wt.-%, preferably 65 - 99 wt.-%, more preferably 75 - 99 wt.-%, even more preferably 80 - 99 wt.-% of the total weight of the carrier material **A.**

According to one or more embodiments, the sum of the amounts of the at least one thermoplastic polymer and the at least one polyether glycol is at least 35 wt.-%, preferably at least 50 wt.-%, more preferably at least 65 wt.-%, even more preferably at least 75 wt.-%, still more preferably at least 85 wt.-%, most preferably at least 95 wt.-%, based on the total weight of the carrier material **A.** According to one or more embodiments, the carrier material **A** further comprises at least one catalyst, preferably at least one acidic catalyst. Examples of suitable acidic catalysts include Lewis acids and Bronsted acids, such as inorganic acids and organic acids and esters thereof. According to one or more embodiments, the at least one catalyst is a Lewis acid catalyst, preferably selected from the group consisting of dioctyltin dilaurate (DOTL), copper(II)acetylacetonate, isopropyl triisostearoyl titanate, and butyl tin dihydroxide chloride.

Preferably, the amount of the at least one catalyst, if used, is not more than 1.0 wt.-%, more preferably not more than 0.5 wt.-%, even more preferably not more than 0.1 wt.-%, still more preferably not more than 0.05 wt.-%, based on the total weight of the carrier material **A.**

According to one or more embodiments, the carrier material **A** comprises the at least one thermoplastic polymer or the at least one polyether glycol having an average molecular weight of not more than 1500 g/mol, preferably not more than 1000 g/mol and optionally the at least one catalyst.

According to one or more embodiments, the carrier material **A** further comprises at least one monofunctional amide compound of formula (I) 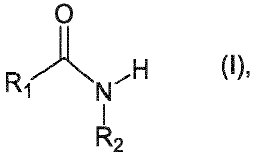 wherein
R₁ represents a hydrogen atom or an alkyl group with 1 to 4 carbon atoms and
R₂ represents a saturated or unsaturated linear or branched alkyl group having 8 to 22 carbon atoms, preferably 15 to 22 carbon atoms.

Addition of the monofunctional amide compounds of formula (I) into the cleaning composition has been found out to further improve cleaning properties of the cleaning composition.

According to one or more embodiments, the carrier material **A** comprises the at least one monofunctional amide compound of formula (I), wherein R₁ represents a hydrogen atom. This class of the primary amides is known to a person skilled in the art under the term of "fatty acid amides" or "fatty acid amide waxes".

According to one or more embodiments, the at least one monofunctional amide compound of formula (I) has
- a softening point determined by using a Ring & Ball method according to DIN EN 1238 standard in the range of 55 - 185 °C, preferably 60 - 165 °C, more preferably 60 - 145 °C, even more preferably 65 - 125 °C, still more preferably 65 - 115 °C and/or
- a melting temperature (Tₘ) as determined by DSC according to ISO 11357 standard in the range of 50 - 165 °C, preferably 55 - 145 °C, more preferably 55 - 125 °C, even more preferably 55 - 115 °C, still more preferably 60 - 100 °C.

According to one or more embodiments, the at least one monofunctional amide compound of formula (I) is selected from the group consisting of lauric acid, myristic acid, palmitic acid, stearic acid, linoleic acid, linolenic acid, arachidic acid, arachidonic acid, behenic acid, eicosapentaenoic acid, erucic acid, and docosahexaenoic acid amides, preferably erucic acid amid.

Preferably, the at least one monofunctional amide compound of formula (I), if present in the carrier material **A,** comprises not more than 65 wt.-%, more preferably not more than 55 wt.-%, even more preferably not more than 45 wt.-% of the total weight of the carrier material **A.** According to one or more embodiments, the at least one monofunctional amide compound of formula (I) comprises 1 - 55 wt.-%, preferably 2.5 - 50 wt.-%, more preferably 5 - 45 wt.-%, even more preferably 5 - 35 wt.-%, still more preferably 10 - 25 wt.-% of the total weight of the carrier material **A.**

According to one or more embodiments, the cleaning composition comprises:
a) At least 65 wt.-%, more preferably at least 75 wt.-% of the carrier material **A** and
b) 0.5 - 25 wt.-%, preferably 1.5 - 20 wt.-%, more preferably 2.5 - 15 wt.-%, even more preferably 5 - 15 wt.-% of the at least one compound **B,** all proportions being based on the total weight of the cleaning composition.

The cleaning composition may further comprise at least one solid particulate filler. Suitable solid fillers for use in the cleaning composition include, for example, inert mineral fillers, such as calcium carbonate, clay, expanded clay, diatomaceous earth, pumice, mica, kaolin, talc, dolomite, xonotlite, perlite, vermiculite, Wollastonite, barite, magnesium carbonate, calcium hydroxide, calcium aluminates, silica, and fumed silica.

The at least one solid particular filler, if used, is preferably present in the cleaning composition in an amount of not more than 20 wt.-%, more preferably not more than 15 wt.-%, even more preferably not more than 10 wt.-%, based on the total weight of the cleaning composition.

The cleaning composition can further contain various additional substances and additives, for example, those selected from the group consisting of thermal stabilizers, antioxidants, plasticizers, flame retardants, dyes, pigments such as titanium dioxide and carbon black, matting agents, antistatic agents, biocides, optical brighteners, and desiccants. The total amount of such additional substances and additives is preferably not more than 35 wt.-%, more preferably not more than 25 wt.-%, based on the total weight of the cleaning composition.

The cleaning composition of the present invention can be produced by mixing the constituents of the cleaning composition, i.e. the at least the carrier material **A** and the at least one compound **B,** with each other using a suitable mixing apparatus.

The details of the mixing process depend on the embodiment of the cleaning composition, in particular on the softening and/or melting temperature of the carrier material **A** and/or the at least one compound **B.** In case the carrier material **A** and/or the at least one compound **B** has a softening and/or melting temperature that is above the normal room temperature, such as at least 10 °C, in particular at least 20 °C above the normal room temperature, it may be advantageous to heat at least a portion of the constituents of the cleaning composition before or during mixing, either by applying external heat sources or by friction generated by the mixing process itself, in order to facilitate processing of the components into a homogeneously mixed mixture by decreasing viscosities and/or melting of individual components. In these embodiments, suitable mixing apparatuses for use in mixing the constituents of the cleaning composition include, for example, dispersion mixer, planetary mixer, such as planetary roller, extruder such as a twin screw extruder, kneader, such as a Buss, Banbury, or roller kneader, or a two-roll mill.

On the other hand, in case the carrier material **A** and/or the at least one compound **B** has a softening point and/or melting temperature that is below the normal room temperature, such as at least 5 °C, in particular at least 10 °C below the normal room temperature, it may be preferable that at least a portion of the constituents of the cleaning composition are not heated before or during mixing. In these embodiments, suitable mixing apparatuses for use in mixing the constituents of the cleaning composition include, for example, dispersion mixers.

The storing of the cleaning composition also depends on the embodiment of the cleaning composition, in particular on the softening and/or melting temperature of the cleaning composition. In case the cleaning composition has a softening and/or melting temperature that is above the normal room temperature, such as at least 10 °C, in particular at least 20 °C above the normal room temperature, the cleaning composition is preferably stored in form of solid granulates, flakes or as a solid block.

Generally, the cleaning composition is preferably stored in package, such as a metallic drum, which offers adequate protection against environmental influence and which is especially is impermeable to moisture.

At the time of use, the cleaning composition is removed from the package, transformed into a liquid state by heating, if required, and transferred to the apparatus to be cleaned by using the feeding arrangement of the apparatus, such as a hose and a pumping unit. In case of a cleaning composition that is solid at normal room temperature, the cleaning composition is first placed to a heating apparatus, such as to a drum melter, and heated to a temperature sufficient to liquefy the solid mass. When the cleaning composition is provided packed in a metallic drum it can be heated in the same package using a conventional plate heater.

Another subject of the present invention is a method for removing a reactive adhesive from production, processing and application devices, the method comprising steps of:
i) Feeding a cleaning composition of the present invention to a device such that the reactive adhesive comes in contact with the composition,
ii) Expelling the resulting mixture of the reactive adhesive and the cleaning composition from the device.

Preferably, the temperature of the cleaning composition fed into the cleaning device in step i) of the method is selected such that the viscosity of the cleaning composition determined according to DIN 53019 standard is below 10000 MPa·s, more preferably below 7500 MPa·s, even more preferably below 6000 MPa·s, still more preferably below 5000 MPa·s. The viscosity of the cleaning composition can be determined by busing a rotational viscometer at 5 revolutions per minute, for example by using a Brookfield DV-2 Thermosel viscometer with a spindle No. 27. Preferred temperature of the cleaning composition depends entirely on the embodiment of the cleaning composition. In case of a cleaning composition that is solid at normal room temperature, the cleaning composition is first placed to a heating apparatus and heated to a temperature sufficient to liquefy the solid mass.

It may furthermore be preferable that steps i) and ii) of the method for removing the reactive adhesive from production, processing and application devices are conducted at a temperature that corresponds to the processing/application temperature of the reactive adhesive, i.e. the temperature at which the reactive adhesive has been processed/applied using the device to be cleaned. The expression "temperature of steps i) and ii)" refers here to the temperature inside the production, processing and application device into which the cleaning composition is fed. According to one or more embodiments, the steps i) and ii) are conducted at a temperature of in the range of 60 - 180 °C, in particular 85 - 160 °C.

However, it can also be advantageous that steps i) and ii) of the method for removing the reactive adhesive from production, processing and application devices are conducted at a temperature that is somewhat above the processing/application temperature of the reactive adhesive in order to decrease the viscosity of the reactive adhesive being supplanted form the device. It may, therefore, be advantageous that the steps i) and ii) are conducted at a temperature in the range of 150 - 220 °C, more preferably 160 - 210 °C. The upper limit for the cleaning temperature depends on the embodiment of the cleaning composition. In particular, the cleaning temperature should not exceed the decomposition temperature of the at least one thermoplastic polymer contained in the cleaning composition.

Before feeding of the cleaning composition into the device to be cleaned, the feeding of other components, such as the components used for the production of the reactive adhesive or the feeding of the reactive adhesive, in case of application device, such as coating device, is interrupted. The feeding of the cleaning composition is continued until it is assured that no other components than those contained in the cleaning composition are present at the outlet of the device. The cleaning time, i.e. the length of the time period between start and end of the feeding of the cleaning composition, depends on many individual factors, such as on the cleaning temperature and on the dimensions and geometry of the device to be cleaned.

The end of the cleaning time can be determined visually if the cleaning composition comprises a suitably chosen colorant or pigment. It is also possible to use a fixed cleaning time, which has been determined in advance for a specific type of device and specific composition of the reactive adhesive.

After the cleaning operation, the device can be loaded with a (new) reactive adhesive composition. After the start up, a small quantity of the product is preferably removed to ensure that the produced reactive adhesive is free of the constituents of the cleaning composition.

According to one or more embodiments, the reactive adhesive is a moisture curable adhesive, preferably a moisture curable hot melt adhesive, more preferably a moisture curable polyurethane hot-melt adhesive. According to one or more embodiments, the reactive adhesive contains at least one isocyanate-functional polyurethane polymer.

The term "polyurethane polymer" designates polymers prepared by the so called diisocyanate polyaddition process. These also include those polymers which are virtually or entirely free from urethane groups. Examples of polyurethane polymers are polyether-polyurethanes, polyester-polyurethanes, polyether-polyureas, polyureas, polyester-polyureas, polyisocyanurates and polycarbodiimides.

Still another subject of the present invention is use of the cleaning composition of the present invention for removing a reactive adhesive, preferably a moisture curable hot-melt adhesive, more preferably a moisture curable polyurethane hot-melt adhesive, from production, processing and application devices.

According to one or more embodiments, the reactive adhesive contains at least one isocyanate-functional polyurethane polymer.

### Examples

The followings compounds and products shown in Table 1 were used in the examples.

**Table 1**

| | |
|---|---|
| EVA | Ethylene vinyl acetate copolymer, content of vinyl acetate 27.5 wt.-%, softening point (ASTM E-28) 65-75 °C |
| Fatty acid amide | Fatty acid amide wax, melting temperature 78 - 92 °C |
| PEG-300 | Polyethylene glycol, average molecular weight ca. 300 g/mol |
| PEG-400 | Polyethylene glycol, average molecular weight ca. 300 g/mol |
| DBA | Dibutylamine, CAS number # 111-92-2 |
| DEA | Diethanolamine, CAS number # 111-42-2 |
| IPD | 3-am inomethyl-3,5,5-trimethylcyclohexylam ine |
| TEA | Triethanolamine, CAS number # 102-71-6 |
| Jeffamin D-230 | Difunctional, primary polyetheramine, average molecular weight ca. 230 g/mol |
| Jeffamin D-2000 | Difunctional, primary polyetheramine, average molecular weight ca. 2000 g/mol |

### Preparation of exemplary cleaning compositions

Cleaning composition of example Ex-1 contained 67.5 wt.-% of the EVA, 22.48 wt.-% of the fatty acid amide, 10 wt.-% of TEA, and a colorant. The cleaning composition was prepared by melting the other constituents than TEA at a temperature of 120 °C after which the TEA was added to the melted mixture and the thus obtained composition was drained.

The cleaning compositions of examples Ex 2 to Ex 7 were prepared by mixing the all the constituents of the compositions as shown in Table 2 at normal room temperature using a conventional mixing apparatus.

### Cleaning properties of cleaning compositions

The effectiveness of the cleaning composition of example 1 was tested with different cured adhesives:
- KTL sheet with polyester based adhesive
- A stirrer with acrylate based adhesive
- An adhesive bead of polyester based adhesive

The KTL sheet and the adhesive bead were put into separate containers filled with the tested cleaning composition such that these were fully immersed in the cleaning composition. The containers were stored in an oven at a temperature of 120 °C for a time period of three hours. The stirrer was attached to a mixing apparatus, fully immersed in the tested cleaning composition, and stirred for three hours while keeping the temperature of the tested cleaning composition constant at 120 °C.

After the three hours storage in oven at a temperature of 120 °C, the adhesive coating of the KTL sheet was completely removed and the adhesive bead was completely dissolved in the tested cleaning composition. The adhesive remaining on the surface of the stirrer could be easily removed using a knife. The effectiveness of the cleaning compositions of examples Ex 2 to Ex 7 and the reference examples Ref-1 and Ref-2 was tested with a moisture curable polyurethane-based adhesive. A metal plate was first coated with a 3 mm layer of a commercially available 1-component polyurethane adhesive SikaFlex®-265 (from Sika AG) and the adhesive layer was allowed to cure for 24 hours at normal room conditions (23 °C, relative humidity 50 %).

The metal plate having the cured adhesive layer on its surface was then placed into a flask filled with the tested cleaning composition such that the metal plate was fully immersed in the cleaning composition. The metal plate was cleaned while being immersed in the tested cleaning composition having a temperature of 160 °C for a time period of three hours. At the end of the cleaning period, the metal plate was removed from the flask and the thickness of the cured adhesive layer was measured.

The results in Table 2 show the thickness of the cured adhesive layer at the end of the cleaning period. In case of a complete cleaning, the thickness of the cured adhesive layer was 0 mm.

**Table 2**

| **Composition [wt.-%]** | **Ref-1** | **Ref-2** | **Ex-2** | **Ex-3** | **Ex-4** | **Ex-5** | **Ex-6** | **Ex-7** | **Ex-8** | **Ex-9** |
|---|---|---|---|---|---|---|---|---|---|---|
| Carrier **A** | | | | | | | | | | |
| PEG 300 | 100.00 | | 90.00 | 89.98 | 89.98 | 89.98 | 89.98 | | 29.27 | 60.61 |
| PEG 400 | | 100.00 | | | | | | 89.98 | | |
| EVA | | | | | | | | | 60.61 | 29.27 |
| *Catalyst | | | 0.02 | 0.02 | 0.02 | 0.02 | 0.02 | 0.02 | 0.02 | 0.02 |

| Compound **B** | | | | | | | | | | |
|---|---|---|---|---|---|---|---|---|---|---|
| DBA | | | 10.00 | | | | | | | |
| DEA | | | | | | | 10.00 | 10.00 | | |
| IPD | | | | | 10.00 | | | | | |
| TEA | | | | | | 10.00 | | | 10.10 | 10.10 |
| Jeffamin D-230 | | | | | | | | | | |
| Jeffamin D-2000 | | | | 10.00 | | | | | | |
| ****Cleaning result [mm]** | 3 | 2.9 | 0 | 1 | 0.6 | 0.6 | 0.06 | 0.3 | 0.5 | 0.6 |

| | | | | | | | | | | |
|---|---|---|---|---|---|---|---|---|---|---|
| *Thickness of the coated adhesive layer at the end of the test period *Cu(II)acetylacetonate | | | | | | | | | | |

## Claims

1. A cleaning composition comprising:
a) At least 55 wt.-% of a carrier material **A,** based on the total weight of the cleaning composition, and
b) At least one compound **B** containing one or more amine groups, wherein
the carrier material **A** comprises at least one thermoplastic polymer and/or at least one polyether glycol having an average molecular weight of not more than 1500 g/mol, preferably not more than 1000 g/mol and wherein
the at least one compound **B** is an aliphatic, cycloaliphatic, or arylaliphatic amine, an alkanolamine, or a polyetheramine and wherein the at least one thermoplastic polymer and/or the at least one polyether glycol comprises at least 5 wt.-% of the total weight of the carrier material **A.**

2. The cleaning composition according to claim 1, wherein the at least one compound **B** is selected from the group consisting of alkanolamines and polyetheramines containing one or more primary amine groups.

3. The cleaning composition according to claim 1 or 2, wherein the at least one compound **B** has a vapor pressure at a temperature of 20 °C of not more than 250 Pa, preferably not more than 150 Pa, more preferably not more than 50 Pa and/or a flash point of at least 100 °C, preferably at least 125 °C, more preferably at least 135 °C.

4. The cleaning composition according to any one of previous claims, wherein the at least one compound **B** is an alkanolamine, preferably selected from the group consisting of methyldiethanolamine, dipropanolamine, diisopropanolamine, diethanolamine, triisopropanolamine, and triethanolamine, more preferably from the group consisting of triisopropanolamine and triethanolamine.

5. The cleaning composition according to any one of previous claims, wherein the at least one thermoplastic polymer is selected from the group consisting of ethylene-vinyl acetate copolymers, ethylene-α-olefin copolymers, polyethylene, propylene-ethylene-copolymers, propylene-α-olefin copolymers, and polypropylene.

6. The cleaning composition according to any one of previous claims, wherein the at least one thermoplastic polymer comprises at least 15 wt.-%, preferably at least 25 wt.-%, of the total weight of the carrier material **A** and/or the at least one polyether glycol comprises at least 15 wt.-%, preferably at least 25 wt.-%, of the total weight of the carrier material **A.**

7. The cleaning composition according to any one of previous claims, wherein the at least one polyether glycol has a number average molecular weight in the range of 100 - 1000 g/mol, preferably 150 - 750 g/mol, more preferably 150 - 500 g/mol, even more preferably 150 - 500 g/mol, still more preferably 200 - 400 g/mol.

8. The cleaning composition according to any one of previous claims, wherein the carrier material **A** further comprises at least one monofunctional amide compound of formula (I) 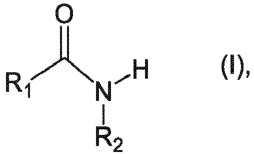 wherein
R₁ represents a hydrogen atom or an alkyl group with 1 to 4 carbon atoms and
R₂ represents a saturated or unsaturated linear or branched alkyl group having 8 to 22 carbon atoms, preferably 15 to 22 carbon atoms.

9. The cleaning composition according to claim 8, wherein the carrier material **A** comprises the at least one monofunctional amide compound of formula (I), wherein R₁ represents a hydrogen atom.

10. The cleaning composition according to claim 8 or 9, wherein the at least one monofunctional amide compound of formula (I) is selected from the group consisting of lauric acid, myristic acid, palmitic acid, stearic acid, linoleic acid, linolenic acid, arachidic acid, arachidonic acid, behenic acid, eicosapentaenoic acid, erucic acid, and docosahexaenoic acid amides.

11. The cleaning composition according to any one of previous claims comprising:
a) At least 65 wt.-%, preferably at least 75 wt.-%, of the carrier material **A** and
b) 0.5 - 25 wt.-%, preferably 1.5 - 20 wt.-% of the at least one compound **B,** all proportions being based on the total weight of the cleaning composition.

12. A method of removing a reactive adhesive from production, processing and application devices, the method comprising steps of:
i) Feeding a cleaning composition as defined in any of claims 1-11 to a device such that the reactive adhesive comes in contact with the cleaning composition,
ii) Expelling the resulting mixture of the reactive adhesive and the cleaning composition from the device.

13. The method according to claim 12, wherein the reactive adhesive contains is a moisture-curable reactive adhesive, preferably a moisture-curable hot-melt adhesive.

14. The method according to claim 12 or 13, wherein the reactive adhesive contains at least one isocyanate-functional polyurethane polymer.

15. Use of the cleaning composition as defined in any of claims 1-11 for removing a reactive adhesive from production, processing and application devices.
